# EUROPÄISCHE PATENTSCHRIFT

(11) **EP 3 954 191 B1**
(45) Veröffentlichungstag und Bekanntmachung des Hinweises auf die Patenterteilung: **25.02.2026**
(21) Anmeldenummer: 21182816.5
(22) Anmeldetag: 30.06.2021
(51) Int. Cl.: A01D 41/12

(54) **ERNTEGUTAUFNAHMEBEHÄLTNIS FÜR EINE ERNTEMASCHINE**
HARVESTED MATERIAL CONTAINER FOR A HARVESTER
RÉCIPIENT DE RÉCOLTE POUR UNE MACHINE DE RÉCOLTE

(30) Priorität: 14.08.2020 DE 102020121473
(43) Veröffentlichungstag der Anmeldung: 16.02.2022
(73) Patentinhaber: CLAAS Selbstfahrende Erntemaschinen GmbH, 33428 Harsewinkel (DE)
(72) Erfinder: Burbank, Martin, 48231 Warendorf (DE)
(74) Vertreter: CLAAS Gruppe

(56) Entgegenhaltungen:
- EP-A2- 2 661 951
- DE-B4- 10 051 096
- US-A1- 2003 078 085
- US-A1- 2009 215 509

## Beschreibung

Die vorliegende Erfindung betrifft ein Erntegutaufnahmebehältnis für eine Erntemaschine gemäß dem Oberbegriff des Anspruches 1.

Erntegutaufnahmebehältnisse für Erntemaschinen weisen einen nach oben offenen Sammelbehälter auf. Der Sammelbehälter weist einen im Wesentlichen polygonalen Öffnungsquerschnitt auf. Zum Verschließen des Sammelbehälters sowie zum Erweitern des Volumens des Sammelbehälters sind paarweise einander gegenüberliegend angeordnete Erweiterungselemente vorgesehen, welche jeweils um eine horizontal verlaufende Schwenkachse am Rand einer Öffnung des Sammelbehälters schwenkbar angelenkt sind. Die sind Erweiterungselemente aus einer im Wesentlichen geschlossenen Transportstellung in eine geöffnete Aufnahmestellung und umgekehrt überführbar. Während der Fahrt auf der Straße befinden sich die Erweiterungselemente raumsparend in ihrer zusammengeklappten Transportstellung, in der Erweiterungselemente den Sammelbehälter verschließen. Dadurch kann eine im Straßenverkehr zulässige Gesamthöhe der Erntemaschine eingehalten werden. Im Betrieb der Erntemaschine auf einem Feld werden die Erweiterungselemente in ihre geöffnete Aufnahmestellung überführt, um das Volumen des Sammelbehälters zu vergrößern.

Ein Erntegutaufnahmebehältnis für eine Erntemaschine der eingangs genannten Art ist aus der DE 100 51 096 B4 bekannt. Die DE 100 51 096 B4 schlägt vor, zur Erhöhung des Fassungsvermögens des Sammelbehälters eine Erweiterungsvorrichtung mit vier Wänden auszustatten, die ein geschlossenes Rechteck bilden. Zwei sich gegenüberliegende Wände sind aus in sich starrem Material gefertigt, das mit Verstärkungsrippen versehen ist. Die verbleibenden Wände sind aus in sich flexiblem Material hergestellt. Die Wände aus in sich starrem Material sind zwischen einer Transportstellung, in der sie aufeinander zu und nach unten verschwenkt sind, und einer aufgerichteten, nach oben offenen Aufnahmestellung verschwenkbar. Die Wände aus in sich flexiblem Material sind endseitig mit den Wänden aus starrem Material verbunden und verbinden letztere miteinander, so dass in der Aufnahmestellung der Vorrichtung ein geschlossener Ring entsteht. Die Wände aus flexiblem Material richten sich mit den Wänden aus starrem Material in die Betriebsstellung auf und falten sich aufgrund ihrer Flexibilität zusammen, wenn die Wände aus starrem Material in die Außerbetriebsstellung geklappt werden.

Das Dokument EP 2 661 951 A2 offenbart ein Erntegutaufnahmebehältnis für eine Erntemaschine nach dem Oberbegriff des Anspruchs 1.

Ausgehend von dem vorstehend genannten Stand der Technik liegt der Erfindung die Aufgabe zugrunde, ein Erntegutaufnahmebehältnis für eine Erntemaschine derart weiterzubilden, wellches sich durch ein vergrößertes Volumen und eine vereinfachte Ausgestaltung der Erweiterungselemente auszeichnet.

Die vorstehende Aufgabe wird bei einem Erntegutaufnahmebehältnis für eine Erntemaschine gemäß dem Oberbegriff von Anspruch 1 durch die Merkmale des kennzeichnenden Teils von Anspruch 1 gelöst. Vorteilhafte Weiterbildungen sind Gegenstand der Unteransprüche.

Ein Erntegutaufnahmebehältnis für eine Erntemaschine wird vorgeschlagen, wobei das Erntegutaufnahmebehältnis einen nach oben offenen Sammelbehälter mit einem im Wesentlichen polygonalen Öffnungsquerschnitt sowie paarweise einander gegenüberliegend angeordnete Erweiterungselemente umfasst. Die Erweiterungselemente sind jeweils um eine im Wesentlichen horizontal verlaufende Schwenkachse an dem Sammelbehälter schwenkbar angelenkt, um die Erweiterungselemente aus einer im Wesentlichen geschlossenen Transportstellung in eine geöffnete Aufnahmestellung und umgekehrt zu überführen, wobei ein oberes Paar Erweiterungselemente in ihrer Transportstellung ein unteres Paar Erweiterungselemente überlappt. Erfindungsgemäß ist vorgesehen, dass die jeweils einander gegenüberliegenden Erweiterungselemente in ihrer Transportstellung sandwichartig übereinander liegen. Die jeweils einander gegenüberliegenden Erweiterungselemente überlappen einander in ihrer Transportstellung. Die jeweils einander gegenüberliegenden Erweiterungselemente erstrecken sich jeweils in Kipprichtung gesehen über die halbe Länge bzw. Breite des Öffnungsquerschnitts hinaus. Dadurch wird erreicht, dass in der geöffneten Aufnahmestellung ein vergrößertes Volumen zur Verfügung steht.

Insbesondere können die jeweils einander gegenüberliegenden Erweiterungselemente in ihrer Transportstellung einander überlappen, wobei ein oberes Paar Erweiterungselemente seinerseits ein unteres Paar Erweiterungselemente überlappt. Somit wird das sandwichartige Übereinanderliegen der Erweiterungselemente einerseits dadurch erreicht, dass sich einander gegenüberliegende Erweiterungselemente in der Transportstellung abschnittsweise überlappen und zudem die Erweiterungselemente des unteren Paares von den Erweiterungselementen des oberen Paares überlappt werden. Das jeweilige untere bzw. obere Paare wird von den jeweils einander gegenüberliegenden Erweiterungselementen gebildet.

Hierzu sind die in ihrer Transportstellung sandwichartig übereinander liegenden Erweiterungselemente in horizontalen Ebenen übereinander positioniert. Die Erweiterungselemente des unteren Paares weisen einen im Wesentlichen trapezförmigen Umriss auf.

Die Erweiterungselemente des oberen Paares weisen bevorzugt einen im Wesentlichen quaderförmigen Umriss auf. Dabei sind die Erweiterungselemente des unteren Paares in Längsrichtung des Erntegutaufnahmebehältnisses gesehen an den Stirnseiten des Sammelbehälters angeordnet, während die Erweiterungselemente des oberen Paares an den Längsseiten des Sammelbehälters angeordnet sind.

Insbesondere können die Erweiterungselemente einteilig ausgebildet sein. Durch die Einteiligkeit der Erweiterungselemente ist die Festigkeit der Erweiterungselemente einfacher realisierbar. Weitere Vorteile der Einteiligkeit der Erweiterungselemente sind die dadurch bedingte Kostenreduzierung sowie die Vereinfachung und Beschleunigung bei der Montage.

Gemäß einer bevorzugten Weiterbildung können die Erweiterungselemente des oberen Paares in ihrem Überlappungsbereich komplementäre Abschnitte aufweisen, die ihrer Transportstellung ineinandergreifen, so dass die Erweiterungselemente des oberen Paares eine im Wesentlichen durchgehende plane Ebene ausbilden. Die Erweiterungselemente des oberen Paares erstrecken sich im Wesentlichen parallel zur Öffnungsebene des Sammelbehälters.

Dabei können die Erweiterungselemente des unteren Paares in ihrer Transportstellung gegenüber dem oberen Paar Erweiterungselemente eine Neigung zur Öffnungsebene des Sammelbehälters aufweisen. Insbesondere können die Erweiterungselemente des unteren Paares nach innen geneigt sein, d.h. parallel zur Schwenkachse verlaufende Außenkanten der Erweiterungselemente des unteren Paares befinden sich unterhalb der Öffnungsebene und weisen in das Innere des Sammelbehälters.

Bevorzugt kann zwischen zwei benachbarten Erweiterungselementen jeweils ein Zwischenelement angeordnet sein. Die Zwischenelemente können dabei im Wesentlichen dreieckförmig ausgeführt sein. Die Zwischenelemente verbinden die Erweiterungselemente miteinander, so dass sich in der Aufnahmestellung eine im Wesentlichen ringförmige Erweiterung des Sammelbehälters ausbildet. Die Erweiterungselemente übertragen die bei der Überführung von der Aufnahmestellung in die Transportstellung bzw. umgekehrt ausgeführte Kippbewegung auf die Zwischenelemente.

Vorzugsweise bestehen die Zwischenelemente aus einem elastischen Material. Bevorzugt können die Zwischenelemente aus einem stoffartigen Material bestehen, welches eine hohe Reißfestigkeit aufweist.

Insbesondere können die Erweiterungselemente des oberen Paares an in Aufnahmestellung sich in vertikaler Richtung erstreckenden Randbereichen eine Abkantung aufweisen, welche sich in Richtung des gegenüberliegenden Erweiterungselementes erstreckt. Die Abkantungen an den Randbereichen der Erweiterungselemente des oberen Paares können sich in Transportstellung auf den Erweiterungselementen des unteren Paares abstützen. Hierdurch können die Erweiterungselemente des oberen Paares zu den darunter befindlichen Erweiterungselementen beabstandet gehalten werden, so dass diese nicht bündig aufliegen. Zugleich bilden sich dadurch Zwischenräume aus, welche die Zwischenelemente in der Transportposition zumindest teilweise ausfüllen.

Des Weiteren kann das Erntegutaufnahmebehältnis zur Überführung der Erweiterungselemente zwischen der Transportstellung und der Aufnahmestellung eine Betätigungsvorrichtung umfassen, welche einen gemeinsamen Aktor aufweist, der durch mehrere mechanische Koppelglieder zur gesteuerten Bewegung der Erweiterungselemente eingerichtet ist. Die Betätigungsvorrichtung kann mit den Erweiterungselementen eine kinematische Kette bilden.

Dabei kann zumindest eines der Erweiterungselemente des unteren Paares durch zumindest ein kennliniengesteuertes Koppelglied mit dem Aktor trieblich in der Weise verbunden sein, dass eine sequentielle Bewegung der beiden Erweiterungselemente des unteren Paares bewirkt wird. Sequentielle Bewegung bedeutet hierbei eine zeitlich und räumlich aufeinander abgestimmte Bewegung der Erweiterungselemente des unteren Paares, durch die eine Kollision während der Überführung zwischen der Transportstellung und der Aufnahmestellung bzw. umgekehrt verhindert wird.

Hierzu kann das zumindest eine Koppelglied als eine Feder, insbesondere eine Gaszugfeder, ausgebildet sein.

Weiterhin können die Erweiterungselemente des oberen Paares durch ein als eine mehrteilige Koppel ausgebildetes Koppelglied miteinander verbunden sein, durch welches eine sequentielle Bewegung der beiden Erweiterungselemente des oberen Paares bewirkt wird. Sequentielle Bewegung bedeutet hierbei eine zeitlich und räumlich aufeinander abgestimmte Bewegung der Erweiterungselemente des oberen Paares, durch die eine Kollision während der Überführung zwischen der Transportstellung und der Aufnahmestellung bzw. umgekehrt verhindert wird.

Hierbei kann die mehrteilige Koppel eine Koppelstange und ein Koppelelement aufweisen, welche in Längsrichtung der Koppelstange relativ zueinander beweglich sind, wobei die Koppelstange und das Koppelelement durch zumindest ein kennliniengesteuertes Koppelglied miteinander verbunden sind. Insbesondere kann das zumindest eine kennliniengesteuerte Koppelglied elastisch verformbar sein. Hierzu kann das zumindest eine kennliniengesteuerte Koppelglied als Dämpfer, insbesondere hydraulischer Dämpfer, ausgeführt sein.

Weiterhin wird die eingangs gestellte Aufgabe durch eine Erntemaschine, insbesondere eine selbstfahrende Erntemaschine, mit einem Erntegutaufnahmebehältnis gelöst, welches nach einem der Ansprüche 1 bis 14 ausgeführt ist. Auf alle Ausführungen zu dem vorschlagsgemäßen Erntegutaufnahmebehältnis wird verwiesen.

Die vorliegende Erfindung wird nachstehend anhand eines in den Zeichnungen dargestellten Ausführungsbeispieles näher erläutert.

Es zeigen:
- Fig. 1: schematisch eine Seitenansicht einer Erntemaschine mit einem Erntegutaufnahmebehältnis;
- Fig. 2: schematisch eine perspektivische Ansicht von Erweiterungselementen des Erntegutaufnahmebehältnisses in ihrer Aufnahmestellung;
- Fig. 3: schematisch eine Betätigungsvorrichtung zur Überführung der Erweiterungselemente gemäß Fig. 2 zwischen einer Transportstellung und der Aufnahmestellung;
- Fig. 4: eine Teilansicht des Erntegutaufnahmebehältnisses;
- Fig. 5: eine Teilansicht einer mehrteiligen Koppel; und
- Fig. 6a bis 6f: schematisch einen Ablauf des Überführens der Erweiterungselemente von der Aufnahmestellung in die Transportstellung.

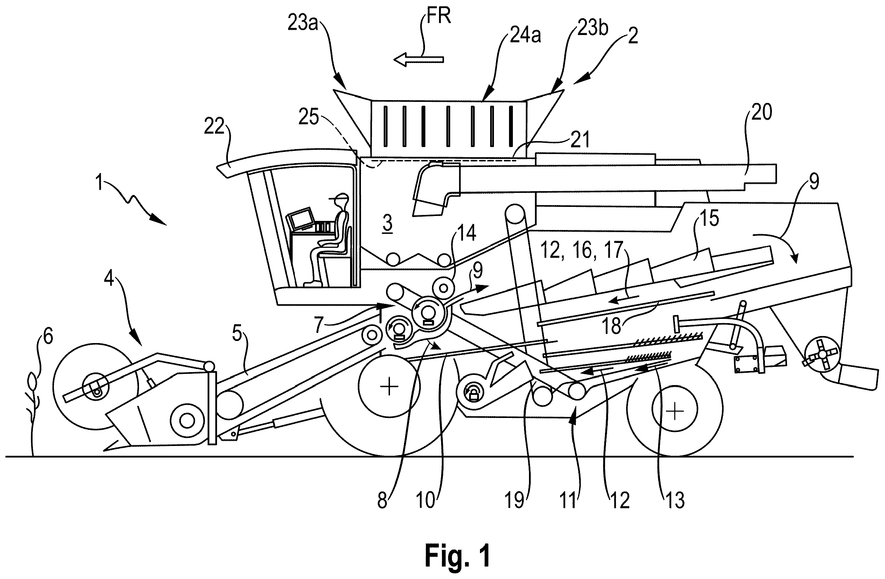

In Fig. 1 ist schematisch eine Seitenansicht einer Erntemaschine 1 dargestellt, die als ein Mähdrescher ausgeführt ist. Die Erntemaschine 1 weist ein Erntegutaufnahmebehältnis 2 auf, welches ein Sammelbehälter 3 mit einem im Wesentlichen polygonalen Öffnungsquerschnitt umfasst sowie paarweise einander gegenüberliegend angeordnete Erweiterungselemente 23a, 23b, 24a, 24b, welche jeweils um eine - exemplarisch angedeutete - horizontal verlaufende Schwenkachse 25 am Rand einer Öffnung 21 des Sammelbehälters 3 schwenkbar angelenkt sind. Die Erweiterungselemente 23a, 23b, 24a, 24b sind zur Vergrößerung des Volumens des Sammelbehälter 3 trichterförmig aufgestellt, d.h. sie befinden sich in ihrer Aufnahmestellung. Die Erntemaschine 1 ist frontseitig mit einem als Schneidwerk ausgeführten Vorsatzgerät 4 ausgestattet, das an einem Schrägförderer 5 angeordnet ist. Mit dem Vorsatzgerät 4 nimmt die Erntemaschine 1 das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 unterteilt wird. Das Korn-Spreu-Gemisch 8 wird über einen Vorbereitungsboden 10 direkt zu einer Reinigungseinrichtung 11 gefördert, welche die Körner 12 von den Nichtkornbestandteilen 13, das heißt von Halm- und Spreuteilen trennt.

Hinter dem Dreschwerk 7 ist eine entgegen dem Uhrzeigersinn rotierende Wendetrommel 14 angeordnet, die den aus ausgedroschenen Halmen bestehenden Gutstrom 9 auf eine als Hordenschüttler 15 ausgeführte Abscheidevorrichtung fördert. Der Hordenschüttler 15 trennt noch im Gutstrom 9 vorhandene Körner 12, Kurzstroh 16 und Spreu 17, die über einen Rücklaufboden 18 ebenfalls in die Reinigungseinrichtung 11 gelangen. Alternativ kann die Abscheidevorrichtung als zumindest ein Axialtrennrotor ausgeführt sein. Die von der Reinigungseinrichtung 11 abgetrennten Körner 12 fördert ein Kornelevator 19 in den Sammelbehälter 3, der als ein Behälter mit im Wesentlichen polygonaler Grundfläche ausgeführt ist und üblicherweise hinter einer Fahrerkabine 22 der Erntemaschine 1 angeordnet ist. Der Sammelbehälter 3 weist eine obere Öffnung 21 auf, die eine Öffnungsebene bildet. Oberhalb der Öffnung 21 sind die Erweiterungselemente 23, 24 angeordnet sind. Bei Bedarf werden die Körner 12 mit einem Korntankentleerförderer 20 aus dem Sammelbehälter 3 auf einen Transportwagen (nicht dargestellt) umgeladen. Ein Pfeil FR gibt die Fahrtrichtung der Erntemaschine 1 im Erntebetrieb wieder. In Transportstellung der Erweiterungselemente 23, 24 verschließen diese die obere Öffnung 21, um eine im Straßenverkehr zulässige Gesamthöhe der Erntemaschine 1 einzuhalten.

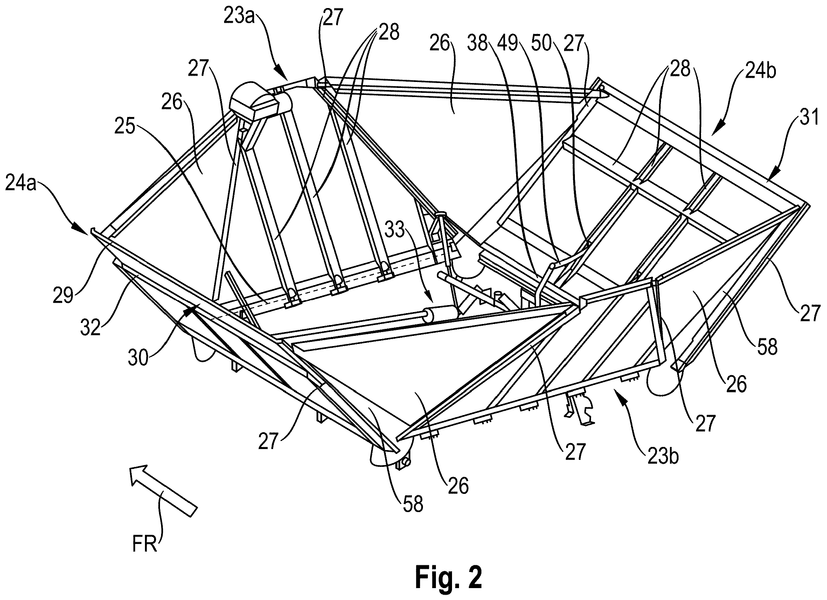

Die Darstellung in Fig. 2 zeigt schematisch eine perspektivische Ansicht nur der Erweiterungselemente 23a, 23b, 24a, 24b in ihrer Aufnahmestellung. Zwischen jeweils zwei benachbarten Erweiterungselementen 23a, 24a; 23a, 24b; 24b, 23b; 23b, 24a ist jeweils ein Zwischenelement 26 angeordnet, welches an sich in der Aufnahmestellung in vertikaler Richtung erstreckenden Randbereichen 27 der benachbarten Erweiterungselemente 23a, 23b, 24a, 24b befestigt ist. Die Zwischenelemente 26 bestehen aus einem elastischen Material. Insbesondere bestehen die Zwischenelemente 26 bestehen aus einem stoffartigen Material, welches eine hohe Reißfestigkeit aufweist und sich andererseits aufgrund seiner Elastizität zusammenlegen oder falten lässt. Die Erweiterungselemente 23a, 23b, 24a, 24b bestehen aus einem in sich starren Material. Zudem können zur Erhöhung der Steifigkeit Streben 28 vorgesehen sein, die an den einander zugewandten Innenseiten der Erweiterungselemente 23a, 23b, 24a, 24b angeordnet sind. Die Erweiterungselemente 23a, 23b, 24a, 24b sind einteilig ausgebildet.

Erfindungsgemäß ist vorgesehen, dass die jeweils einander gegenüberliegenden Erweiterungselemente 23a, 23b, 24a, 24b in ihrer Transportstellung sandwichartig übereinander liegen. Dabei können die jeweils einander paarweise gegenüberliegenden Erweiterungselemente 23a, 23b bzw. 24a, 24b in ihrer Transportstellung einander überlappen, wobei ein von den Erweiterungselementen 24a, 24b gebildetes oberes Paar ein von den Erweiterungselementen 23a, 23b gebildetes unteres Paar überlappt, wie weiter unten beschrieben wird. In ihrer Transportstellung sind die sandwichartig übereinander liegenden Erweiterungselemente 23a, 23b, 24a, 24b in horizontalen Ebenen übereinander positioniert. Dabei sind die Erweiterungselemente 23a, 23b des unteren Paares in Längsrichtung des Erntegutaufnahmebehältnisses 2 gesehen an den einander gegenüberliegenden Stirnseiten des Sammelbehälters 3 angeordnet, während die Erweiterungselemente 24a, 24b des oberen Paares an den einander gegenüberliegenden Längsseiten des Sammelbehälters 3 angeordnet sind.

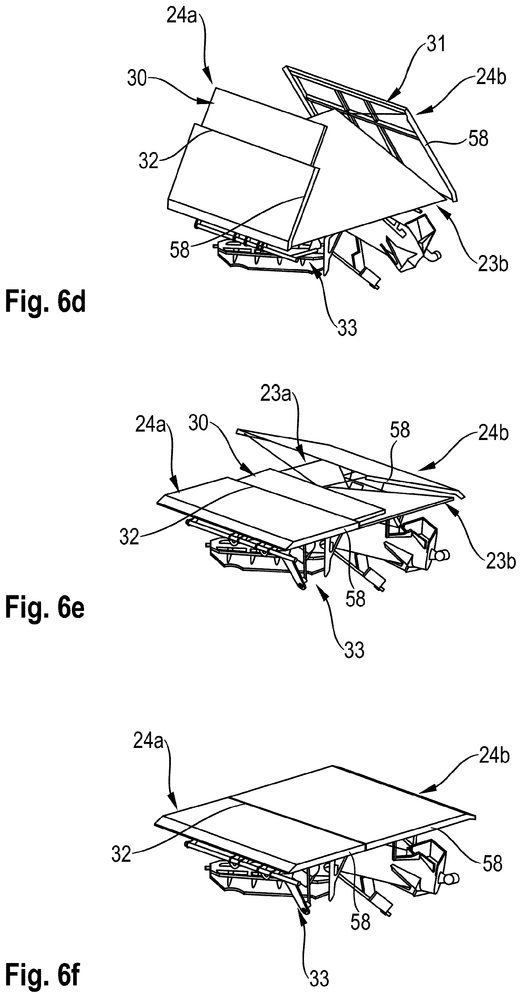

Das obere Paar Erweiterungselemente 24a, 24b weist in seinem Überlappungsbereich komplementäre Abschnitte 30, 31 auf, die ihrer Transportstellung ineinandergreifen, so dass das obere Paar der Erweiterungselemente 24a, 24b eine im Wesentlichen durchgehende plane Ebene ausbildet, was in Fig. 6f dargestellt ist. Im dargestellten Ausführungsbeispiel weist ein Erweiterungselement 24a einen parallel zur horizontalen, stirnseitigen Außenkante 29 verlaufenden stufenförmigen Absatz 32 auf, der den Abschnitt 30 im Überlappungsbereich mit dem gegenüberliegenden Erweiterungselement 24b begrenzt. Mit 31 ist der Abschnitt des gegenüberliegenden Erweiterungselements 24b bezeichnet, welcher in geschlossener Transportstellung an dem Abschnitt 30 im Wesentlichen formschlüssig anliegt. Das Erntegutaufnahmebehältnis 2 umfasst zur Überführung der Erweiterungselemente 23a, 23b, 24a, 24b zwischen der Transportstellung und der Aufnahmestellung eine Betätigungsvorrichtung 33.

Die Erweiterungselemente 24a, 24b des oberen Paares weisen an den in Aufnahmestellung sich in vertikaler Richtung erstreckenden Randbereichen 27 jeweils eine Abkantung 58 auf, welche sich in Richtung des gegenüberliegenden Erweiterungselementes 24a, 24b erstreckt. Die Abkantungen 58 verlaufen im Wesentlichen senkrecht zur Oberfläche des jeweiligen Erweiterungselementes 24a, 24b. Die Abkantungen 58 an den Randbereichen 27 der Erweiterungselemente 24a, 24b des oberen Paares können sich in Transportstellung auf den Erweiterungselementen 23a, 23b des unteren Paares abstützen. Hierdurch können die Erweiterungselemente 24a, 24b des oberen Paares zu den darunter befindlichen Erweiterungselementen 24a, 24b des unteren Paares beabstandet gehalten werden, so dass diese nicht bündig aufliegen. Zugleich bilden sich dadurch Zwischenräume aus, welche die Zwischenelemente 26 in der Transportposition zumindest teilweise ausfüllen.

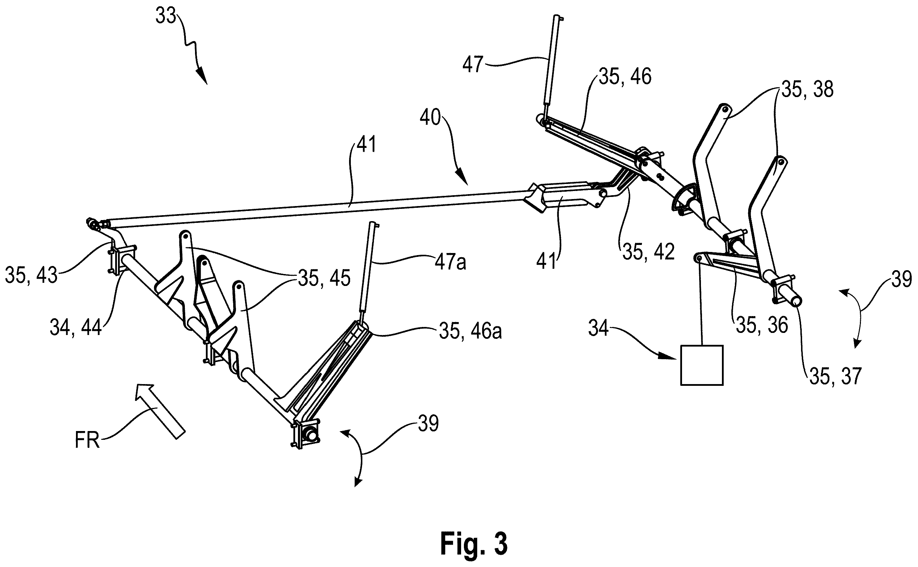

In Fig. 3 ist schematisch die Betätigungsvorrichtung 33 zur Überführung der Erweiterungselemente 23a, 23b, 24a, 24b gemäß Fig. 2 zwischen der Transportstellung und der Aufnahmestellung dargestellt. Die Darstellung zeigt aus Vereinfachungsgründen nur die wesentlichen Komponenten der Betätigungsvorrichtung 33. Die Betätigungsvorrichtung 33 weist einen gemeinsamen Aktor 34 auf, der zur gesteuerten Bewegung der Erweiterungselemente 23a, 23b, 24a, 24b eingerichtet ist. Hierzu sind die Erweiterungselemente 23a, 23b, 24a, 24b mit dem Aktor 34 durch mehrere mechanische Koppelglieder 35 trieblich verbunden. Die die Erweiterungselemente 23a, 23b, 24a, 24b der Aktor 34 und die Koppelglieder 35 bilden eine kinematische Kette. Der Begriff Koppelglied 35 wird vereinfachend als verallgemeinernder Oberbegriff für verschiedene mechanische Bauteile der Betätigungsvorrichtung 33 mit zum Teil unterschiedlichen Eigenschaften verwendet, die nachfolgend näher spezifiziert werden.

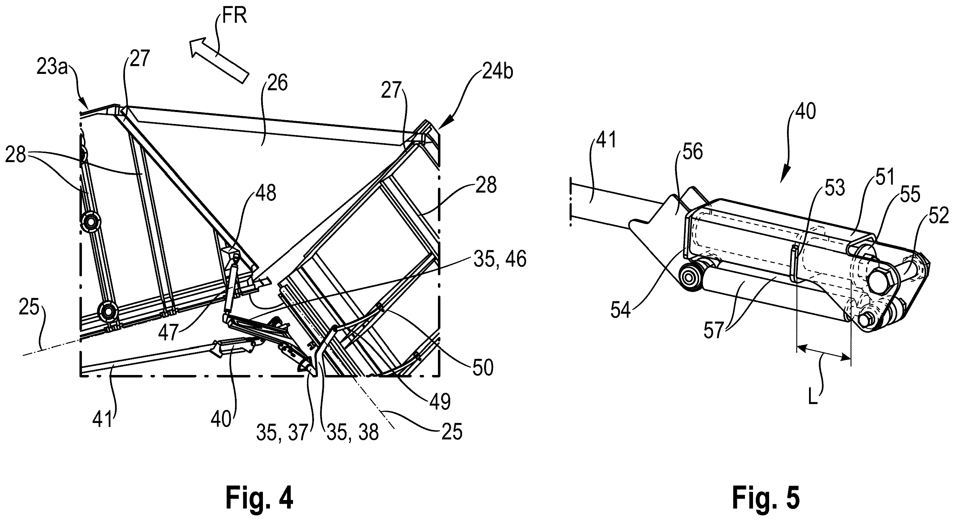

Hier und vorzugsweise greift der Aktor 34, der insbesondere als Linearantrieb ausgeführt ist, an einem als Hebelarm 36 ausgeführten Koppelglied 35 an, welcher mit einer drehbar gelagerten Antriebswelle 37 als weiterem Koppelglied 35 drehfest verbunden ist. An der Antriebswelle 37 sind Aufstellhebel 38 als Koppelglieder 35 drehfest angeordnet, an deren freien Enden ein Hebel 49 schwenkbar angeordnet ist, der an einer Lagerstelle 50 des Erweiterungselementes 24b angelenkt ist, welches an einer der parallel zur Fahrtrichtung FR verlaufenden Längsseiten des Erntegutaufnahmebehältnisses 2 angeordnet ist. Die von dem Aktor 34 erzeugte lineare Bewegung wird durch den Hebelarm 36 auf die Antriebswelle 37 übertragen und in eine Drehbewegung 39 umgewandelt. Parallel zu der Antriebswelle 37 ist eine weitere Antriebswelle 44 als Koppelglied 35 angeordnet. Die Antriebswelle 44 ist durch als ein als mehrteilige Koppel 40 ausgeführtes Koppelglied mit der gegenüberliegenden Antriebswelle 37 mechanisch verbunden. Der Aufbau der mehrteiligen Koppel 40 wird weiter unten unter Bezugnahme auf Fig. 5 näher erläutert.

Die mehrteilige Koppel 40 umfasst eine Koppelstange 41, die im Wesentlichen quer zur Längsachse des Erntegutaufnahmebehältnisses 2 respektive der Fahrtrichtung FR verlaufend angeordnet ist. Ein der Antriebswelle 37 zugewandtes Ende der Koppel 40 ist durch einen Kipphebel 42 mit dieser drehfest verbunden. Die Koppel 40 ist an dem freien Ende des Kipphebels 42 gelenkig angebunden. Die Koppelstange 41 ist mit ihrem freien Ende mit einem als Kipphebel 43 ausgeführten Koppelglied 35 gelenkig verbunden. An der Antriebswelle 44 sind ebenfalls Aufstellhebel 45 als Koppelglieder 35 drehfest angeordnet, an welchen das korrespondierende Erweiterungselemente 24a mittels zumindest eines Hebels 49 und zumindest einer Lagerstelle 50 angelenkt ist. Die mehrteilige Koppel 40 überträgt eine Linearbewegung auf den Kipphebel 43, die von dem Kipphebel 43 als Kipp- oder Schwenkbewegung auf die Antriebswelle 44 übertragen wird.

Im Bereich zwischen dem Erweiterungselement 23a und dem Erweiterungselement 24b ist an der Antriebswelle 37 ein Hebelarm 46 als Koppelglied 35 drehfest angeordnet. Am freien Ende des Hebelarmes 46 ist ein kennliniengesteuertes Koppelglied 47 angeordnet, welches mit dem Erweiterungselement 23a verbunden ist. Das Koppelglied 47 ist längenveränderlich, wobei die Längenänderung kennliniengesteuert erfolgt. Das Koppelglied 47 ist vorzugsweise als Gasfeder, insbesondere als Gaszugfeder ausgeführt. Die Rotationsbewegung der Antriebswelle 37 wird, in Abhängigkeit von der Rotationsrichtung, durch den Kipphebel 42 als Zug- oder Schubbewegung auf das Koppelglied 47 übertragen, was zu einer Kipp- oder Schwenkbewegung des daran angebundenen Erweiterungselement 23a führt. Im Bereich zwischen dem Erweiterungselement 23b und dem Erweiterungselement 24a ist an der Antriebswelle 37 ein Hebelarm 46a als Koppelglied 35 drehfest angeordnet. Am freien Ende des Hebelarmes 46a ist ebenfalls ein kennliniengesteuertes, längenveränderliches Koppelglied 47a angeordnet, welches mit dem Erweiterungselement 23b verbunden ist. Das Koppelglied 47a ist vorzugsweise als Gasfeder, insbesondere als Gaszugfeder ausgeführt.

Die Darstellung in Fig. 4 zeigt eine Teilansicht des Erntegutaufnahmebehältnisses 2. Dargestellt ist - in Fahrtrichtung FR gesehen - ein Eckbereich des Erntegutaufnahmebehältnis 2, in welchem das Erweiterungselement 23a sowie das benachbarte Erweiterungselement 24b durch das Zwischenelement 26 miteinander verbunden sind. Das als Gaszugfeder ausgeführte Koppelglied 47 ist mit seinem freien Ende an einer innenseitig angeordneten Lagerstelle 48 am Erweiterungselement 23a angelenkt. Die Aufstellhebel 38, 45 sind jeweils durch einen Hebel 49 an einer innenseitig angeordneten Lagerstelle 50 am Erweiterungselement 24a bzw. 24b angelenkt. Unter einer innenseitigen Anordnung ist zu verstehen, dass die Lagerstellen 48, 50 in der Transportstellung dem Inneren des Sammelbehälters 3 zugewandt sind.

In Fig. 5 ist eine Teilansicht der mehrteiligen Koppel 40 dargestellt. Die Koppel 40 umfasst die nur teilweise dargestellte Koppelstange 41 sowie ein Koppelelement 51. Das Koppelelement 51 ist als ein im Wesentlichen U-förmiges Profilteil ausgeführt. Das Koppelelement 51 ist an seinem der Antriebswelle 37 zugewandten Ende um eine Schwenkachse 52 schwenkbar angelenkt. Das Koppelelement 51 weist einen ersten Anschlag 53 und einen zweiten Anschlag 54 auf, die koaxial zur Koppelstange 41 ortsfest an dem Koppelement 51 angeordnet sind. Die beiden Anschläge des Koppelelementes 51 dienen der Führung der Koppelstange 41. Die Koppelstange 41 und das Koppelement 51 sind relativ zueinander, in axialer Richtung der Koppelstange 41 beweglich. Der erste Anschlag 53 ist benachbart zur Schwenkachse 52 angeordnet. Der zweite Anschlag 54 ist beabstandet zum ersten Anschlag 53 des Koppelelementes 51 angeordnet.

Die Koppelstange 41 weist ebenfalls einen ersten Anschlag 55 und einen zweiten Anschlag 56 auf, die ortsfest auf der Koppelstange 41 angeordnet sind. Der erste Anschlag 55 ist am freien Ende der Koppelstange 41 angeordnet und in Längsrichtung der Koppelstange 41 gesehen hinter dem ersten Anschlag 53 des Koppelelementes 51 angeordnet. Der zweite Anschlag 56 ist in Längsrichtung der Koppelstange 41 gesehen vor dem zweiten Anschlag 54 des Koppelements 51 angeordnet. Parallel zur Koppelstange 41 und dem Koppelelement 51 ist zumindest ein kennliniengesteuertes Koppelglied 57 angeordnet, welches die Koppelstange 41 und das Koppelelement 51 miteinander verbindet. Das zumindest eine Koppelglied 57 ist als ein Dämpfer ausgeführt. Vorzugsweise sind zwei Dämpfer mit gleicher Dämpfkraft als Koppelglieder 57 vorgesehen.

Die Mehrteiligkeit, hier und vorzugsweise die Zweiteiligkeit der zueinander relativbeweglichen Komponenten Koppelstange 41 und Koppelelement 51, der Koppel 40 lässt durch die Anordnung der ersten und zweiten Anschläge 53, 54 des Koppelements 51 und der ersten und zweiten Anschläge 55, 56 der Koppelstange 41 eine definierte Längung L der Koppelstange 41 gegenüber dem Koppelelement 51 zu. Beim Überführen von der Aufnahmestellung in die Transportstellung der Erweiterungselemente 24a, 24b liegt der zweite Anschlag 56 der Koppelstange 41 am zweiten Anschlag 54 des Koppelements 51 an, wobei die Koppel 40 ist ungelängt. Die Drehbewegung 39 der Antriebswelle 37 führt dazu, dass aufgrund der Relativbeweglichkeit der erste Anschlag 53 des Koppelements 51 in Richtung des ersten Anschlags 55 der Koppelstange 41 bewegt wird. Dies führt zu einer zeitversetzt nacheilenden Bewegung des Erweiterungselementes 24a gegenüber dem Erweiterungselement 24b. Für das Überführen von der Transportstellung in die Aufnahmestellung der Erweiterungselemente 24a, 24b wird aufgrund der Relativbeweglichkeit der erste Anschlag 53 des Koppelements 51 in Richtung des ersten Anschlags 55 der Koppelstange 41 bewegt. Die hierbei zu überbrückende Längung L führt dazu, dass das Erweiterungselement 24b bereits nach außen bewegt wird, während das darunterliegende Erweiterungselement 24a noch in seiner Transportstellung verbleibt. Erst wenn der erste Anschlag 53 des Koppelements 51 an dem ersten Anschlag 55 der Koppelstange 41 anliegt, beginnt sich auch das das Erweiterungselement 24a sich nach außen zu bewegen.

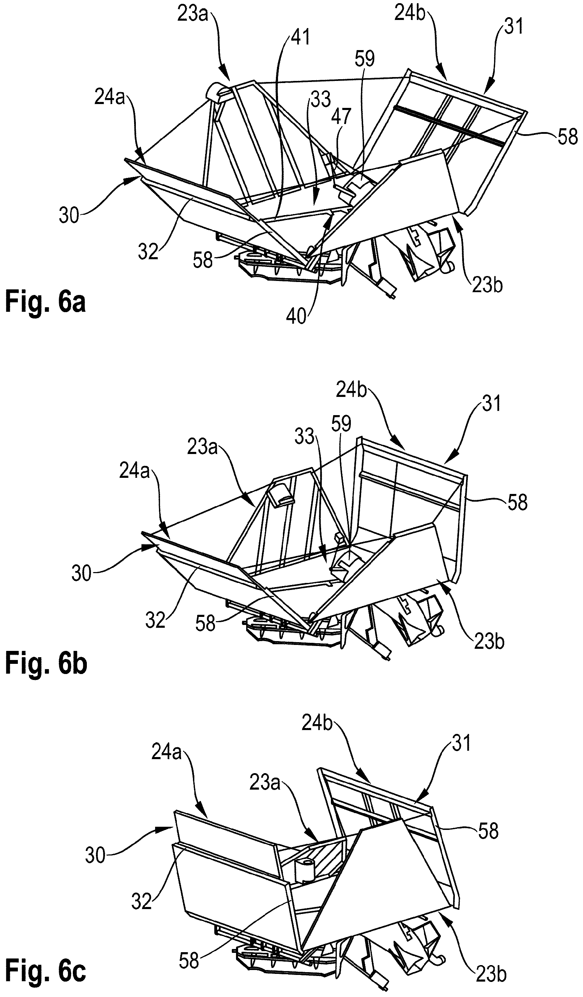

In den Fig. 6a bis 6f ist schematisch der Ablauf des Überführens der Erweiterungselemente 23a, 23b, 24a, 24b von der Aufnahmestellung in die Transportstellung dargestellt. Fig. 6a zeigt die Erweiterungselemente 23a, 23b, 24a, 24b in ihrer Aufnahmestellung als Ausgangsstellung. Auf die Darstellung der die Erweiterungselemente 23a, 23b, 24a, 24b in Umfangsrichtung verbindenden Zwischenelemente 26 wurde für eine bessere Veranschaulichung verzichtet. Das als Gaszugfeder ausgeführte Koppelglied 47 weist in der Ausgangstellung des Erweiterungselementes 23a keine Längenänderung auf. Die Ansteuerung des Aktors 34 bewirkt, dass das Erweiterungselement 23a zunächst mittels des an der Antriebswelle 37 angeordneten Koppelgliedes 47 und das Erweiterungselement 24b mittels des an der Antriebswelle 37 angeordneten Aufstellhebels 38 hin zur Transportstellung verschwenkt werden. Die Koppel 40, welche die von dem Aktor 34 auf die Antriebswelle 37 ausgeübte Drehbewegung 39 über den Kipphebel 43 auf die gegenüberliegende Antriebswelle 44 überträgt, befindet sich in der Ausgangsstellung ebenfalls in im Wesentlichen ungelängter Stellung, so dass die Erweiterungselemente 23b und 24b nicht verfahren werden, d.h. sie verbleiben zunächst in ihrer Ausgangsstellung. Der Schließvorgang der beiden Erweiterungselemente 23b und 24b beginnt somit gegenüber den Erweiterungselementen 23a und 24a zeitlich versetzt.

Aus Fig. 6b ist ersichtlich, dass nach einer Ansteuerung des Aktors 34, insbesondere durch eine Steuerungsvorrichtung der Erntemaschine 1, das Erweiterungselement 23a eine zur Hochachse des Erntegutaufnahmebehältnisses 2 nach innen gerichtete Neigung aufweist. Dabei ist das Erweiterungselement 23a in Richtung des gegenüberliegenden Erweiterungselements 23b geneigt, wobei das Erweiterungselement 23b weiterhin eine nach außen gerichtete Neigung aufweist. Die Neigung des Erweiterungselementes 23a ist in dieser Zwischenposition so groß, dass die Schwerpunktlage des Erweiterungselementes 23a überschritten ist, d.h., dass das Erweiterungselement 23a bei fehlender Gegenkraft nach innen kippen würde. Die gegenüber dem gegenüberliegenden Erweiterungselement 23b größere Neigung des Erweiterungselements 23a wird durch das Koppelglied 47 bewirkt. Hierzu weist das als Gaszugfeder ausgeführte Koppelglied 47 eine spezifische Kennlinie und eine definierte Auslösebelastung auf, d.h. eine spezifische Gegenkraft, welche das Koppelglied 47 benötigt, bevor dieses eine Längung auslöst. Weiterhin kann der Kennlinienverlauf derart gewählt sein, dass zugleich eine niedrigere Belastung als die Auslösebelastung zur vollständigen Längung des als Gaszugfeder ausgeführten Koppelgliedes 47 notwendig ist. Bis zum Erreichen der Auslösebelastung wird die von dem Hebelarm 46 übertragene Zugkraft gleichermaßen von dem ungelängten Koppelglied 47 auf das Erweiterungselement 23a übertragen.

Das zum Erweiterungselement 23a benachbarte Erweiterungselement 24b hat durch die vom Aktor 34 auf die Antriebswelle 37 übertragene Drehbewegung 39 ebenfalls eine in Richtung des gegenüberliegenden Erweiterungselement 24a gerichtete Neigung, wobei die Schwerpunktlage des Erweiterungselementes 24b nicht überschritten ist.

Fig. 6c zeigt alle Erweiterungselemente 23a, 23b, 24a, 24b in einer gegenüber Fig. 6a signifikant veränderten Position. Das Erweiterungselement 23a ist weiter nach innen geneigt, da das Koppelglied 47 noch keine Längenänderung erfahren hat. Das zum Erweiterungselement 23a benachbarte Erweiterungselement 24b hat eine Neigung, welche bereits über die Schwerpunktlage des Erweiterungselementes 24b hinausgeht. Die Erweiterungselemente 23b und 24a befinden sich nun ebenfalls in einer nach innen geneigten Position, wobei die Schwerpunktlage der Erweiterungselemente 23b und 24a nicht überschritten ist. Um ein ungedämpftes Kippen der Erweiterungselemente 23a und 24b nach innen bei fehlender Gegenkraft zu vermeiden, zumal sich die Koppel 40 auf Grund der fortgesetzten Rotation der Antriebswelle 37 nun von ihrem ungelängten Zustand hin zu ihrem gelängten Zustand bewegt, wird diese Kippbewegung durch das kennliniengesteuerte Koppelglied 57 gedämpft. Das Einfahren der Koppel 40 hin zu dem ungelängten Zustand ermöglicht nun eine zumindest kurzzeitige beschleunigte Kippbewegung der Erweiterungselemente 24a und 23b gegenüber der Kippbewegung der Erweiterungselemente 24b und 23a.

Aus Fig. 6d ist ersichtlich, dass alle Erweiterungselemente 23a, 23b, 24a, 24b eine Neigung aufweisen, welche über die Schwerpunktlage hinausgeht. Das Erweiterungselement 23a befindet sich in einer Position unterhalb des Erweiterungselements 23b, in der es auf einem Auflager 59, beispielsweise einem Befüllkopf im Inneren des Erntegutaufnahmebehältnisses 2, aufliegt. Das Erweiterungselement 23b wird durch die - nicht dargestellten - Zwischenelemente 26 von den Erweiterungselementen 24a und 24b in einer geneigten Position gehalten, die unterhalb der Erweiterungselemente 24a, 24b liegt. Die Bewegung der Erweiterungselemente 24a und 24b erfolgt zeitlich versetzt. Erreicht wird dies einerseits durch die Längung L, wie weiter oben bereits ausgeführt, und andererseits durch das zumindest eine als Dämpfer ausgeführten Koppelglied 57, welche im Fall des jeweiligen Überschreitens der Schwerpunktlage der Erweiterungselemente 24a und 23b für eine großmöglichste Dämpfung mit einer fest definierten Falldauer bewirken.

Nach Erreichen der horizontalen Endlage des Erweiterungselements 23a längt sich das Koppelglied 47, welches sich zuvor ununterbrochen im ungelängten Zustand befand, sodass sich die Antriebswelle 35 weiterdrehen kann, um die noch nicht in Ihrer Transportstellung befindlichen Erweiterungselemente 23b, 24a, 24b in die Transportstellung zu überführen. Selbiges gilt für das als Gaszugfeder ausgeführte Koppelglied 47a, welches zum Verschließen des Erweiterungselements 23b zuständig ist und an der Antriebswelle 44 mittels des Hebelarms 46a angeordnet ist.

Die Darstellung gemäß Fig. 6e zeigt die Erweiterungselemente 23a, 23b, 24a in ihrer Transportposition, während das Erweiterungselement 24b noch zu dem darunter befindlichen Erweiterungselement 24a beabstandet ist. Die Erweiterungselemente 23a, 23b, die als das untere Paar bezeichnet sind, weisen in ihrer Transportstellung gegenüber dem oberen Paar der Erweiterungselemente 24a, 24b eine Neigung zur Horizontalen auf.

Fig. 6f zeigt die Erweiterungselemente 23a, 23b, 24a, 24b in ihrer Transportposition. Die Erweiterungselemente 24a, 24b, die als das obere Paar bezeichnet sind, bilden eine im Wesentlichen durchgehende plane Ebene aus. Die Erweiterungselemente 23a, 23b, die als das untere Paar bezeichnet sind, weisen in ihrer Transportstellung gegenüber dem oberen Paar eine Neigung zur Horizontalen auf, was insbesondere aus Fig. 6e ersichtlich ist. In der Transportstellung liegen die jeweils einander gegenüberliegenden Erweiterungselemente 23a, 23b und 23a, 24b sandwichartig übereinander. Die jeweils einander gegenüberliegenden Erweiterungselemente 23a, 23b und 24a, 24b überlappen in ihrer Transportstellung einander. Dabei überlappt das obere Paar, die Erweiterungselemente 24a, 24b das untere Paar, die Erweiterungselemente 23a, 23b. In ihrer Transportstellung sind die sandwichartig übereinander liegenden Erweiterungselemente 23a, 23b, 24a, 24b in horizontalen Ebenen übereinander positioniert.

Das Überführen der Erweiterungselemente 23a, 23b, 24a, 24b aus ihrer in Fig. 6f dargestellten Transportstellung in die in Fig. 6a dargestellte Aufnahmestellung erfolgt entsprechend in umgekehrter Weise. Umgekehrt wird beim Verfahren von der Transportstellung in die Aufnahmestellung zunächst nur das obenliegende, unmittelbar mechanisch an die Antriebswelle 35 angebundene Erweiterungselement 24b verfahren. Sobald die Koppel 40 ihren ungelängten Zustand erreicht, öffnet sich das Erweiterungselement 24a. Anschließend erreicht das dem Erweiterungselement 23b zugeordnete Koppelglied 46a aufgrund der Drehbewegung 39 der Antriebswelle 44 seinen ungelängten Zustand, was nun zum Öffnen des Erweiterungselements 23b führt. Darauf folgt zuletzt das Verschwenken des untenliegenden Erweiterungselements 23a hin zu der Aufnahmestellung, sobald das Koppelglied 47 seinen ungelängten Zustand erreicht.

Die Betätigungsvorrichtung 33 bildet mit den Erweiterungselementen 23a, 23b, 24a, 24b eine kinematische Kette bildet. Durch die kennliniengesteuerten Koppelglieder 47 und 57 lässt sich trotz der mechanischen Kopplung der Komponenten der Betätigungsvorrichtung 33 und der Erweiterungselemente 23a, 23b, 24a, 24b eine fest definierte zeitliche Ablauffolge vorgeben, indem eine zeitweise Entkopplung durch die Koppelglieder 47 und 57 bewirkt wird, so dass ein kollisionsfreies sequenzielles Ein- und Ausklappen der Erweiterungselemente 23a, 23b, 24a, 24b ermöglicht wird. Mit dem nur einen Aktor 34 der Betätigungsvorrichtung 33 lassen sich alle Erweiterungselemente 23a, 23b, 24a, 24b ansteuern und bewegen.

### Bezugszeichenliste

| | | | |
|---|---|---|---|
| 1 | Erntemaschine | 32 | Absatz |
| 2 | Erntegutaufnahmebehältnis | 33 | Betätigungsvorrichtung |
| 3 | Sammelbehälter | 34 | Aktor |
| 4 | Vorsatzgerät | 35 | Koppelglied |
| 5 | Schrägförderer | 36 | Hebelarm |
| 6 | Erntegut | 37 | Antriebswelle |
| 7 | Dreschwerk | 38 | Aufstellhebel |
| 8 | Korn-Spreu-Gemisch | 39 | Drehbewegung |
| 9 | Gutstrom | 40 | Koppel |
| 10 | Vorbereitungsboden | 41 | Koppelstange |
| 11 | Reinigungseinrichtung | 42 | Kipphebel |
| 12 | Körner | 43 | Kipphebel |
| 13 | Nichtkornbestandteile | 44 | Antriebswelle |
| 14 | Wendetrommel | 45 | Aufstellhebel |
| 15 | Hordenschüttler | 46,46a | Hebelarm |
| 16 | Kurzstroh | 47,47a | Koppelglied |
| 17 | Spreu | 48 | Lagerstelle |
| 18 | Rücklaufboden | 49 | Hebel |
| 19 | Kornelevator | 50 | Lagerstelle |
| 20 | Korntankentleerförderer | 51 | Koppelelement |
| 21 | Öffnung von 3 | 52 | Schwenkachse |
| 22 | Fahrerkabine | 53 | Erster Anschlag |
| 23a | Erweiterungselement | 54 | Zweiter Anschlag |
| 23b | Erweiterungselement | 55 | Erster Anschlag |
| 24a | Erweiterungselement | 56 | Zweiter Anschlag |
| 24b | Erweiterungselement | 57 | Koppelglied |
| 25 | Schwenkachse | 58 | Abkantung |
| 26 | Zwischenelement | 59 | Auflager |
| 27 | Randbereich | L | Längung |
| 28 | Strebe | FR | Fahrtrichtung |
| 29 | Außenkante | | |
| 30 | Abschnitt von 24a | | |
| 31 | Abschnitt von 24b | | |

## Patentansprüche

1. Erntegutaufnahmebehältnis (2) für eine Erntemaschine (1), umfassend einen nach oben offenen Sammelbehälter (3) mit einem im Wesentlichen polygonalen Öffnungsquerschnitt sowie paarweise einander gegenüberliegend angeordnete Erweiterungselemente (23a, 23b; 24a, 24b), welche jeweils um eine im Wesentlichen horizontal verlaufende Schwenkachse (25) am Rand einer Öffnung (21) des Sammelbehälters (3) schwenkbar angelenkt sind, um die Erweiterungselemente (23a, 23b, 24a, 24b) aus einer im Wesentlichen geschlossenen Transportstellung in eine geöffnete Aufnahmestellung und umgekehrt zu überführen, wobei ein oberes Paar Erweiterungselemente (24a, 24b) in ihrer Transportstellung ein unteres Paar Erweiterungselemente (23a, 23b) überlappt, **dadurch gekennzeichnet, dass** die jeweils einander gegenüberliegenden Erweiterungselemente (23a, 23b; 24a, 24b) in ihrer Transportstellung sandwichartig übereinander liegen.

2. Erntegutaufnahmebehältnis (2) nach Anspruch 1, **dadurch gekennzeichnet, dass** die jeweils einander gegenüberliegenden Erweiterungselemente (23a, 23b; 24a, 24b) in ihrer Transportstellung einander überlappen.

3. Erntegutaufnahmebehältnis (2) nach Anspruch 1 oder 2, **dadurch gekennzeichnet, dass** die in ihrer Transportstellung sandwichartig übereinander liegenden Erweiterungselemente (23a, 23b; 24a, 24b) in horizontalen Ebenen übereinander positioniert sind.

4. Erntegutaufnahmebehältnis (2) nach Anspruch 1 bis 3, **dadurch gekennzeichnet, dass** die Erweiterungselemente (23a, 23b, 24a, 24b) einteilig ausgebildet sind.

5. Erntegutaufnahmebehältnis (2) nach einem der vorangehenden Ansprüche, **dadurch gekennzeichnet, dass** die Erweiterungselemente (24a, 24b) des oberen Paares in ihrem Überlappungsbereich komplementäre Abschnitte (30, 31) aufweisen, die ihrer Transportstellung ineinandergreifen, so dass die Erweiterungselemente (24a, 24b) des oberen Paares eine im Wesentlichen durchgehende plane Ebene ausbilden.

6. Erntegutaufnahmebehältnis (2) nach einem der vorangehenden Ansprüche, **dadurch gekennzeichnet, dass** die Erweiterungselemente (23a, 23b) des unteren Paares in ihrer Transportstellung gegenüber dem oberen Paar von Erweiterungselemente (24a, 24b) eine Neigung zur Öffnungsebene des Sammelbehälters (3) aufweisen.

7. Erntegutaufnahmebehältnis (2) nach einem der vorangehenden Ansprüche, **dadurch gekennzeichnet, dass** zwischen zwei benachbarten Erweiterungselementen (23a, 23b; 24a, 24b) jeweils ein Zwischenelement (26) angeordnet ist.

8. Erntegutaufnahmebehältnis (2) nach Anspruch 7, **dadurch gekennzeichnet, dass** die Zwischenelemente (26) aus einem elastischen Material bestehen.

9. Erntegutaufnahmebehältnis (2) nach einem der vorangehenden Ansprüche, **dadurch gekennzeichnet, dass** die Erweiterungselemente (24a, 24b) des oberen Paares an sich in Aufnahmestellung in vertikaler Richtung erstreckenden Randbereichen (27) eine Abkantung (58) aufweisen, welche sich in Richtung des gegenüberliegenden Erweiterungselementes (24a, 24b) erstrecken.

10. Erntegutaufnahmebehältnis (2) nach einem der vorangehenden Ansprüche, **dadurch gekennzeichnet, dass** das Erntegutaufnahmebehältnis (2) zur Überführung der Erweiterungselemente (23a, 23b; 24a, 24b) zwischen der Transportstellung und der Aufnahmestellung eine Betätigungsvorrichtung (33) umfasst, welche einen gemeinsamen Aktor (34) aufweist, der durch mehrere mechanische Koppelglieder (35) zur gesteuerten Bewegung der Erweiterungselemente (23a, 23b; 24a, 24b) eingerichtet ist.

11. Erntegutaufnahmebehältnis (2) nach Anspruch 10, **dadurch gekennzeichnet, dass** zumindest eines der Erweiterungselemente (23a, 23b) des unteren Paares durch zumindest ein kennliniengesteuertes Koppelglied (35, 47, 47a) mit dem Aktor (34) trieblich in der Weise verbunden ist, dass eine sequentielle Bewegung der beiden Erweiterungselemente (23a, 23b) des unteren Paares bewirkt wird.

12. Erntegutaufnahmebehältnis (2) nach Anspruch 11, **dadurch gekennzeichnet, dass** das zumindest eine Koppelglied (35, 47, 47a) als eine Feder, insbesondere eine Gaszugfeder, ausgebildet ist.

13. Erntegutaufnahmebehältnis (2) nach einem der vorangehenden Ansprüche, **dadurch gekennzeichnet, dass** die Erweiterungselemente (24a, 24b) des oberen Paars durch ein als mehrteilige Koppel (40) ausgebildetes Koppelglied (35) miteinander verbunden sind, durch welches eine sequentielle Bewegung der beiden Erweiterungselemente (24a, 24b) des oberen Paares bewirkt wird.

14. Erntegutaufnahmebehältnis (2) nach Anspruch 13, **dadurch gekennzeichnet, dass** die mehrteilige Koppel (40) eine Koppelstange (41) und ein Koppelelement (51) aufweist, welche in Längsrichtung der Koppelstange (41) relativ zueinander beweglich sind, wobei die Koppelstange (41) und das Koppelelement (51) durch zumindest ein kennliniengesteuertes Koppelglied (57) miteinander verbunden sind.

15. Erntemaschine (1), insbesondere selbstfahrende Erntemaschine, mit einem Erntegutaufnahmebehältnis (2), **dadurch gekennzeichnet, dass** das Erntegutaufnahmebehältnis (2) nach einem der Ansprüche 1 bis 14 ausgeführt ist.

## Claims

1. Harvested crop receptacle (2) for a harvesting machine (1), comprising an upwardly open collecting container (3) having a substantially polygonal opening cross section and extension elements (23a, 23b; 24a, 24b) which are arranged mutually opposite in pairs and which are each coupled to the edge of an opening (21) of the collecting container (3) so as to be pivotable about a substantially horizontally running pivot axis (25) in order to transfer the extension elements (23a, 23b, 24a, 24b) from a substantially closed transport position into an open receiving position and vice versa, wherein an upper pair of extension elements (24a, 24b) in their transport position overlap a lower pair of extension elements (23a, 23b), **characterized in that** the respectively mutually opposite extension elements (23a, 23b; 24a, 24b) lie one above the other in a sandwich-like manner in their transport position.

2. Harvested crop receptacle (2) according to Claim 1, **characterized in that** the respectively mutually opposite extension elements (23a, 23b; 24a, 24b) overlap each other in their transport position.

3. Harvested crop receptacle (2) according to Claim 1 or 2, **characterized in that** the extension elements (23a, 23b; 24a, 24b) lying one above the other in a sandwich-like manner in their transport position are positioned one above the other in horizontal planes.

4. Harvested crop receptacle (2) according to Claims 1 to 3, **characterized in that** the extension elements (23a, 23b, 24a, 24b) are formed integrally.

5. Harvested crop receptacle (2) according to any one of the preceding claims, **characterized in that** the extension elements (24a, 24b) of the upper pair in their overlapping region have complementary sections (30, 31), which mesh with each other in their transport position such that the extension elements (24a, 24b) of the upper pair form a substantially continuous, flat plane.

6. Harvested crop receptacle (2) according to any one of the preceding claims, **characterized in that** the extension elements (23a, 23b) of the lower pair in their transport position relative to the upper pair of extension elements (24a, 24b) have an inclination with respect to the opening plane of the collecting container (3).

7. Harvested crop receptacle (2) according to any one of the preceding claims, **characterized in that** an intermediate element (26) is in each case arranged between two adjacent extension elements (23a, 23b; 24a, 24b).

8. Harvested crop receptacle (2) according to Claim 7, **characterized in that** the intermediate elements (26) are composed of an elastic material.

9. Harvested crop receptacle (2) according to any one of the preceding claims, **characterized in that** the extension elements (24a, 24b) of the upper pair have, on edge regions (27) extending in the vertical direction in the receiving position, a bevel (58) extending in the direction of the opposite extension element (24a, 24b).

10. Harvested crop receptacle (2) according to any one of the preceding claims, **characterized in that**, for transferring the extension elements (23a, 23b; 24a, 24b) between the transport position and the receiving position, the harvested crop receptacle (2) comprises an actuating device (33), which has a common actuator (34) which, by means of a plurality of mechanical coupling elements (35), is designed for the controlled movement of the extension elements (23a, 23b; 24a, 24b).

11. Harvested crop receptacle (2) according to Claim 10, **characterized in that** at least one of the extension elements (23a, 23b) of the lower pair is connected in terms of drive to the actuator (34) by at least one characteristic-controlled coupling member (35, 47, 47a) in such a way that a sequential movement of the two extension elements (23a, 23b) of the lower pair is brought about.

12. Harvested crop receptacle (2) according to Claim 11, **characterized in that** the at least one coupling member (35, 47, 47a) is designed as a spring, in particular a gas tension spring.

13. Harvested crop receptacle (2) according to any one of the preceding claims, **characterized in that** the extension elements (24a, 24b) of the upper pair are connected to each other by a coupling member (35) which is designed as a multi-part coupling (40) and by which a sequential movement of the two extension elements (24a, 24b) of the upper pair is brought about.

14. Harvested crop receptacle (2) according to Claim 13, **characterized in that** the multi-part coupling (40) has a coupling rod (41) and a coupling element (51), which are movable relative to each other in the longitudinal direction of the coupling rod (41), the coupling rod (41) and the coupling element (51) being connected to each other by at least one characteristic-controlled coupling member (57).

15. Harvesting machine (1), in particular self-propelled harvesting machine, having a harvested crop receptacle (2), **characterized in that** the harvested crop receptacle (2) is designed according to any one of Claims 1 to 14.

## Revendications

1. Récipient de récolte (2) destiné à une machine de récolte (1), comprenant un réservoir collecteur (3) ouvert vers le haut, doté d'une section d'ouverture sensiblement polygonale, ainsi que des éléments d'extension (23a, 23b ; 24a, 24b) qui sont disposés en vis-à-vis les uns des autres par paires et sont articulés respectivement de manière pivotante autour d'un axe de pivotement (25) sensiblement horizontal sur le bord d'une ouverture (21) du réservoir collecteur (3) aux fins d'amener les éléments d'extension (23a, 23b ; 24a, 24b) d'une position de transport sensiblement fermée dans une position de collecte ouverte et inversement, une paire supérieure d'éléments d'extension (24a, 24b) chevauchant, dans leur position de transport, une paire inférieure d'éléments d'extension (23a, 23b), **caractérisé en ce que** les éléments d'extension (23a, 23b ; 24a, 24b) situés respectivement en vis-à-vis les uns des autres sont superposés à la manière d'un sandwich dans leur position de transport.

2. Récipient de récolte (2) selon la revendication 1, **caractérisé en ce que** les éléments d'extension (23a, 23b ; 24a, 24b) situés respectivement en vis-à-vis les uns des autres se chevauchent dans leur position de transport.

3. Récipient de récolte (2) selon la revendication 1 ou 2, **caractérisé en ce que** les éléments d'extension (23a, 23b ; 24a, 24b), qui sont superposés les uns aux autres en sandwich dans leur position de transport, sont placés les uns au-dessus des autres dans des plans horizontaux.

4. Récipient de récolte (2) selon la revendication 1 à 3, **caractérisé en ce que** les éléments d'extension (23a, 23b ; 24a, 24b) sont réalisés d'une seule pièce.

5. Récipient de récolte (2) selon une des revendications précédentes, **caractérisé en ce que** les éléments d'extension (24a, 24b) de la paire supérieure présentent, dans leur zone de chevauchement, des portions complémentaires (30, 31) qui s'engagent l'une dans l'autre dans leur position de transport, de sorte que les éléments d'extension (24a, 24b) de la paire supérieure forment un plan plat sensiblement continu.

6. Récipient de récolte (2) selon une des revendications précédentes, **caractérisé en ce que** les éléments d'extension (23a, 23b) de la paire inférieure présentent, dans leur position de transport, une inclinaison vers le plan d'ouverture du réservoir collecteur (3), par rapport à la paire supérieure d'éléments d'extension (24a, 24b).

7. Récipient de récolte (2) selon une des revendications précédentes, **caractérisé en ce qu'**un élément intermédiaire (26) est disposé respectivement entre deux éléments d'extension (23a, 23b ; 24a, 24b) voisins.

8. Récipient de récolte (2) selon la revendication 7, **caractérisé en ce que** les éléments intermédiaires (26) sont constitués d'un matériau élastique.

9. Récipient de récolte (2) selon une des revendications précédentes, **caractérisé en ce que** les éléments d'extension (24a, 24b) de la paire supérieure présentent, dans des zones de bord (27) s'étendant dans la direction verticale dans la position de collecte, une partie coudée (58) qui s'étend en direction de l'élément d'extension (24a, 24b) situé en vis-à-vis.

10. Récipient de récolte (2) selon une des revendications précédentes, **caractérisé en ce que** le récipient de récolte (2) comporte, aux fins de déplacement des éléments d'extension (23a, 23b ; 24a, 24b) entre la position de transport et la position de collecte, un dispositif d'actionnement (33) qui présente un actionneur (34) commun, lequel est agencé pour le mouvement contrôlé des éléments d'extension (23a, 23b ; 24a, 24b), du fait de plusieurs organes d'accouplement (35) mécaniques.

11. Récipient de récolte (2) selon la revendication 10, **caractérisé en ce qu'**au moins un des éléments d'extension (23a, 23b) de la paire inférieure est relié du point de vue de l'entraînement à l'actionneur (34) par au moins un organe d'accouplement (35, 47, 47a) commandé par courbes caractéristiques, de manière à provoquer un mouvement séquentiel des deux éléments d'extension (23a, 23b) de la paire inférieure.

12. Récipient de récolte (2) selon la revendication 11, **caractérisé en ce que** l'organe d'accouplement (35, 47, 47a), au nombre d'au moins un, est réalisé sous forme de ressort, en particulier de ressort de traction à gaz.

13. Récipient de récolte (2) selon une des revendications précédentes, **caractérisé en ce que** les éléments d'extension (24a, 24b) de la paire supérieure sont reliés entre eux par un organe d'accouplement (35) réalisé sous forme de bielle (40) en plusieurs parties, qui provoque un mouvement séquentiel des deux éléments d'extension (24a, 24b) de la paire supérieure.

14. Récipient de récolte (2) selon la revendication 13, **caractérisé en ce que** la bielle (40) en plusieurs parties comporte une tige d'accouplement (41) et un élément d'accouplement (51) qui sont mobiles l'un par rapport à l'autre dans le sens longitudinal de la tige d'accouplement (41), la tige d'accouplement (41) et l'élément d'accouplement (51) étant reliés l'un à l'autre par au moins un organe d'accouplement (57) commandé par courbes caractéristiques.

15. Machine de récolte (1), en particulier machine de récolte automotrice, dotée d'un récipient de récolte (2) **caractérisée en ce que** le récipient de récolte (2) est réalisé conformément à l'une des revendications 1 à 14.
